# EUROPÄISCHE PATENTSCHRIFT

(11) **EP 2 542 704 B1**
(45) Veröffentlichungstag und Bekanntmachung des Hinweises auf die Patenterteilung: **07.05.2014**
(21) Anmeldenummer: 10787006.5
(22) Anmeldetag: 11.11.2010
(51) Int. Cl.: C21B 3/04, B02C 15/00, C04B 5/00, C22B 7/04, C22B 7/00

(54) **AUFBEREITUNGSVERFAHREN FÜR EDELSTAHLSCHLACKEN UND STAHLWERKSSCHLACKEN ZUR METALLRÜCKGEWINNUNG**
PREPARATION METHOD FOR STAINLESS STEEL SLAGS AND STEELMAKING SLAGS FOR RECOVERING METAL
PROCÉDÉ DE TRAITEMENT DE SCORIES D'ACIER ALLIÉ ET DE SCORIES MÉTALLURGIQUES EN VUE DE LA RÉCUPÉRATION DES MÉTAUX

(30) Priorität: 05.03.2010 DE 102010010385
(43) Veröffentlichungstag der Anmeldung: 09.01.2013
(73) Patentinhaber: Loesche GmbH, 40549 Düsseldorf (DE)
(72) Erfinder: GEROLD, Carsten, 41516 Grevenbroich (DE); DARDEMANN, Frank, 52159 Roetgen (DE); LANGEL, Jörg, 51147 Köln (DE); WULFERT, Holger, 10719 Berlin (DE)
(74) Vertreter: Heim, Florian Andreas
(86) Internationale Anmeldenummer: PCT/EP2010/006879
(87) Internationale Veröffentlichungsnummer: WO 2011/107124

(56) Entgegenhaltungen:
- EP-A2- 0 292 739
- WO-A1-2007/022837
- CN-A- 101 152 636
- JP-A- 5 245 405
- US-A- 4 747 547
- US-A1- 2008 148 902

## Beschreibung

Die Erfindung betrifft ein Aufbereitungsverfahren für Edelstahlschlacken und Stahlwerksschlacken (LD-, Lichtbogenofen-Schlacken etc.) beziehungsweise modifizierter Stahlwerksschlacken zur Metallrückgewinnung bei gleichzeitiger Erzeugung einer silikatischen Fraktion als Produkt mit einer definierten Produktkörnung und definierten Eigenschaften.

Edelstahlschlacken sind Schlacken, die bei der Herstellung hochlegierter Stähle als Nebenprodukt anfallen. Edelstahlschlacken bestehen überwiegend (ca. 80 bis 90 Gew.-%) aus einer silikatischen Matrix, deren Hauptkomponente Dicalciumsilicat ist, und aus einem Metallanteil, welcher vom Stahl und von den zusätzlichen Legierungselementen, wie Chrom, Nickel, Mangan, Molybdän, Vanadium etc., stammt und als reines Metall in Form von Granalien vorliegt oder in Form von Agglomeraten, diversen Legierungen und Oxiden von der Silikatmatrix umgeben und von dieser eingeschlossen ist. Der Metallgehalt in den Edelstahlschlacken variiert in Abhängigkeit vom metallurgischen Verfahren und den zugegebenen Rohstoffen und kann ca. 5 bis 10 Gew.-% betragen. Nach Voranreicherung kann der Metallgehalt derartiger Schlacken bei 20 bis 30 Gew.-% liegen.

Bei Stahlwerksschlacken, zum Beispiel LD- und Lichtbogenofen-Schlacken, liegt Eisen weitestgehend chemisch gebunden vor. Zur Aufbereitung und Gewinnung der Metallinhalte und einer silikatischen Fraktion werden die Stahlwerksschlacken vor der Aufbereitung chemisch einer reduktiven Behandlung unterzogen und liegen als modifizierte Stahlwerksschlacken vor, in welchen die Metallinhalte weitestgehend metallisch vorliegen. Die Metallinhalte derartiger Schlacken schwanken in der Regel zwischen 10 und 30 Gew.%.

Die Metalle liegen teilweise frei, überwiegend jedoch als Verwachsungen mit der silikatischen Matrix vor. Für die Gewinnung der Metalle ist ein Aufschluss beziehungsweise eine Aufbereitung erforderlich. Die Aufbereitung umfasst Zerkleinerungs-, Klassier- und Sortierprozesse.

Eine effiziente Rückgewinnung der Metalle aus Edelstahlschlacken oder modifizierten Stahlwerksschlacken zur Rückführung in die Edelstahlproduktion beziehungsweise Stahlproduktion ist auch unter dem Aspekt der Verknappung von Rohstoffen und der relativ hohen Kosten, zum Beispiel für die Legierungsmetalle der Edelstähle, geboten. Außerdem soll eine möglichst uneingeschränkte Verwendung der silikatischen Fraktion als Baustoff möglich sein.

Angestrebt werden Aufbereitungsverfahren, mit welchen eine nahezu silikatfreie Metallfraktion und eine weitgehend metallfreie silikatische Fraktion hergestellt werden können. Die Wiederverwertung der Bestandteile der Edelstahlschlacken beziehungsweise der modifizierten Stahlwerksschlacken wird auch im Hinblick auf eine ansonsten erforderliche Deponierung derartiger Schlacken angestrebt, welche mit Kosten verbunden ist und zu Umweltproblemen führen kann. Zudem stellt eine silikatische Fraktion mit einer definierten Produktkörnung und definierten Eigenschaften ein vermarktungsfähiges Produkt dar.

Eine bekannte Aufbereitungstechnologie sieht durchgängig Nassprozesse für die Zerkleinerungs-, Klassierungs- und Sortierstufen vor (US-A 5 427 607). Die Feinzerkleinerung der vorgebrochenen Schlacke erfolgt in der Regel in Stab- und Kugelmühlen, für die Klassierung sind Siebe oder Hydrozyklone vorgesehen, und für eine Dichtesortierung werden Setzmaschinen, Wendelscheider oder Schraubenklassierer eingesetzt. Die Nass-Aufbereitung ermöglicht eine Metall-Rückgewinnung von etwa 80 Gew.%.

Nachteile der bekannten Nass-Aufbereitung sind eine erforderliche Wasserverfügbarkeit, welche nicht in allen Regionen gegeben ist, und relativ hohe Kosten für Wasseraufbereitung und Wasserkreisläufe und insbesondere für die Zerkleinerung auf eine Korngröße von beispielsweise < 6 mm. Ein weiterer Nachteil der Aufbereitung durch nasse Verfahren ist die Eluation der Schwermetalle und das damit einhergehende Umweltgefährdungspotential.

Aus DE 10 2004 005 535 A1 ist ein Aufbereitungsverfahren mit zunächst trockenen und nachfolgenden nassen Zerkleinerungs-, Klassier- und Sortierstufen bekannt. Rohschlacke wird mit selektiver Prallzerkleinerung, Sieben, Magnetabscheidern, Wirbelstrom- und induktiven Abscheidungen sowie Luftsetzung zu einem Produkt mit einer Korngröße < 20 mm zerkleinert und danach in eine erste Kornfraktion mit einer Korngröße > 2 mm und in eine zweite Kornfraktion mit einer Korngröße < 2mm getrennt. Die erste Kornfraktion wird einem Schüttelgerät zugeführt und in eine Metallfraktion, eine Zwischengutfraktion und eine Korngemischfraktion aufgetrennt. Die Metallfraktion stellt das Endprodukt dar, das Zwischengut wird zur Freisetzung des Metalls zum Zerkleinerungsaggregat zurückgeführt, und das Korngemisch ist ein vermarktungsfähiges Produkt für Bauarbeiten. Die zweite Kornfraktion wird einer Feinstoffreinigungsstufe zugeführt, die aus einem Aufkonzentrierungsschritt, einer Kugelmühle und zwei Wasserentzugsschnecken besteht.

Es sind außerdem trocken arbeitende Aufbereitungsverfahren bekannt, bei denen die Zerkleinerungs-, Klassier- und Sortierstufen ausschließlich trocken arbeiten. Zur Sortierung werden Magnetscheider eingesetzt, welche die Magnetisierbarkeit der metallischen Bestandteile der Schlacken als Trennkriterium ausnutzen. Außerdem sind trockene Dichtesortierungen, beispielsweise mittels Luftsetzmaschinen, bekannt, welche auf den Dichteunterschied zwischen Metall und silikatischer Matrix beruhen. Bekannt sind auch Sensor-Sortiertechniken, bei welchen die Metalle mittels induktiver Sensoren erkannt und mittels Druckluft ausgeschleust werden (WP 2009/077425 A1).

Bei diesen rein trockenen Prozessen erfolgt eine Zerkleinerung der Rohschlacken in Hammermühlen oder Prallmühlen, welche grundsätzlich eine selektive Zerkleinerung der Schlacken ermöglichen. Nachteilig wirken sich die relativ hohen Umfangsgeschwindigkeiten der Rotoren dieser Mühlen sowie die beschränkten Möglichkeiten der Einstellungen aus. Neben einem hohen spezifischen Verschleiß entsteht ein hoher Anteil an Feinstkorn, verbunden mit einer Beanspruchung und Deformation der Metallpartikel, welche dann auch in die Fein- und Feinstkornfraktion gelangen können. Eine Verringerung der Prallenergie führt andererseits zu einem unzureichenden mechanischen Aufschluss der Schlacken, so dass die Metallpartikel nicht vollständig freigelegt werden. Da das gesamte Produkt erst nach dem Zerkleinerungsprozess klassiert und sortiert wird, werden nicht unerhebliche Metallanteile mit der silikatischen Fraktion ausgetragen. Damit verbunden sind eine Verschlechterung der Qualität der silikatischen Fraktion und dementsprechend ein verringertes Ausbringen der Metalle in die Metallfraktion. Dem kann nur mit einer kostenaufwändigen Nachsortierung der Fein- und Feinstfraktion begegnet werden.

Aus der US 2008/0148902 A1 ist die Zerkleinerung von Stahlwerksschlacken durch verschiedene Mühlentypen bekannt.

Aus der EP 0 292 739 A2 ist die Verwendung einer Mühlenkombination zum Zermahlen von Mahlgut bekannt.

Ein weiteres Verfahren mittels einer Vertikalwalzenmühle zur Zerkleinerung von Material ist in der WO 2007/022837 A1 beschrieben. In ähnlicher Weise sind Zerkleinerungsprozesse unter der Verwendung von Mühlen aus der US 4,747,547, der JP 05245405 und der CN 101152636 A bekannt.

Der Erfindung liegt die Aufgabe zugrunde, ein durchgängig trocken arbeitendes Aufbereitungsverfahren zur Metallrückgewinnung aus Edelstahlschlacken und modifizierten Stahlwerksschlacken zu schaffen, welches eine verschleißarme und energieeffiziente Zerkleinerung der silikatischen Matrix mit Aufschluss der Metallpartikel und eine trennscharfe Separierung der Metallpartikel beziehungsweise des Metailanteüs und des Silikatanteils der Edelstahlschlacken beziehungsweise modifizierten Stahlwerksschlacken gewährleistet sowie an unterschiedliche Ausgangsschlackenzusammensetzungen und unterschiedliche Anforderungen hinsichtlich der Qualität der Metallfraktion und der Silikatfraktion angepasst werden kann.

Erfindungsgemäß wird die Aufgabe durch ein Verfahren gemäß Anspruch 1 gelöst. Zweckmäßige und vorteilhafte Ausgestaltungen sind Merkmale der Unteransprüche sowie in der Figurenbeschreibung beschrieben.

Ein wesentlicher Bestandteil des erfindungsgemäßen Aufbereitungsverfahrens ist eine selektive Zerkleinerung der Edelstahlschlacken beziehungsweise der modifizierten Stahlwerksschlacken, bei welcher die silikatische Fraktion zerkleinert wird, während die metallische Fraktion durch die mechanische Beanspruchung aufgeschlossen und damit von silikatischen Anhaftungen und Verwachsungen gereinigt wird. Die ursprüngliche Korngröße und Partikelform der metallischen Fraktion bleibt weitestgehend erhalten.

Die Erfindung basiert auf dem Grundgedanken, für ein ausschließlich trocken arbeitendes Aufbereitungsverfahren für Edelstahlschlacken und auch für modifizierte Stahlwerksschlacken Wälzmühlen einzusetzen. Wälzmühlen weisen eine Mahlbahn für ein darauf aufzubauenden Mahlbett sowie auf dem Mahlbett abrollende Mahlwalzen auf. Gemäß der Erfindung wird Edelstahlschlacke oder modifizierte Stahlwerksschlacke mit einer Aufgabekörnung bis maximal 150 mm einer Wälzmühle zugeführt und in dieser zerkleinert und desagglomeriert.

In diesem Zusammenhang sollen unter Wälzmühlen vorzugsweise Wälzmühlen des LOESCHE-Typs, aber auch Kugelringmühlen, Federrollenmühlen, Walzenschüsselmühlen, Kollergänge und Rollenmühlen wie Pendelrollenmühlen verstanden werden, welche eine horizontale, geneigte oder auch muldenförmige Mahlbahn und kegelige oder zylindrische oder ballige Mahlwalzen aufweisen. Die Mahlwalzen werden mittels Eigengewicht, Federsystemen oder mittels hydraulischer beziehungsweise hydraulisch-pneumatischer Arbeitszylinder mit stufenloser Einstellmöglichkeit elastisch auf das Mahlbett gepresst, so dass eine vorteilhafte Zerkleinerung im Gutbett erfolgt.

Die Verwendung einer LOESCHE-Wälzmühle mit einem horizontalen Mahlteller und mit auf einer Mahlbahn des Mahltellers abrollenden, konischen Mahlwalzen, deren Mantelfläche nahezu parallel zur Mahlbahn verläuft, ist besonders für das erfindungsgemäße trockene Aufbereitungsverfahren geeignet, da sowohl eine Druckzerkleinerung mit Scheranteil als auch eine reine Druckzerkleinerung angewendet werden kann, welche über die Mahlwalzenachsen-Lage zum Drehpunkt des Mahltellers eingestellt werden kann.

Es wurde gefunden, dass eine wirkungsvolle Zerkleinerung und Desagglomeration der aufgegebenen Edelstahlschlacke beziehungsweise der modifizierten Stahlwerksschlacke mit Separierung der Metallfraktion von der Silikatfraktion erreicht wird, wenn eine Druckzerkleinerung mit Scheranteil durchgeführt wird. Die konischen Walzen sind dann unter etwa 15° gegenüber der horizontalen Mahlbahn geneigt angeordnet, und die Mahlwalzenachsen schneiden die Mahltellerachse oberhalb der Mahlbahnebene.

Grundsätzlich können unterschiedlich große Wälzmühle eingesetzt werden, welche sich hinsichtlich des Durchmessers des Mahltellers beziehungsweise der Mahlschüssel und Größe und Anzahl der Mahlwalzen unterscheiden. So können Wälzmühlen mit 2, 3, 4, 5 oder 6 Mahlwalzen eingesetzt werden. Die Anzahl der Mahlwalzen kann mit zunehmender Mühlengröße auch höher sein.

Es wurde gefunden, dass in einer Wälzmühle eine selektive Zerkleinerung der aufgegebenen Edelstahlschlacke bzw. der modifizierten Stahlwerksschlacke durch Druckbeanspruchung und einen konstruktiv-variablen Scheranteil oder auch allein durch Druckbeanspruchung erreicht wird und nach der Vermahlung Metallpartikel und silikatische Partikel frei vorliegen und voneinander getrennt werden können.

Bei Einsatz einer Wälzmühlen-Sichter-Kombination kann unmittelbar nach der Zerkleinerung der silikatischen Matrix und dem Aufschluss der Metallpartikel eine Separierung der Silikatfraktion von der Metallfraktion durchgeführt werden.

Grundsätzlich kann das erfindungsgemäße Aufbereitungsverfahren in Wälzmühlen durchgeführt werden, welche nach dem Luftstrommodus oder nach dem sogenannten überlaufmodus betrieben werden. Wälzmühlen im Luftstrommodus weisen einen Sichter auf, welcher auf die Wälzmühle aufgesetzt beziehungsweise in die Wälzmühle integriert ist. Die Sortierung beziehungsweise Separierung der zerkleinerten, aufgeschlossenen und desagglomerierten Schlacke in eine metallische und silikatische Fraktion erfolgt innerhalb der Luftstrom-Wälzmühle.

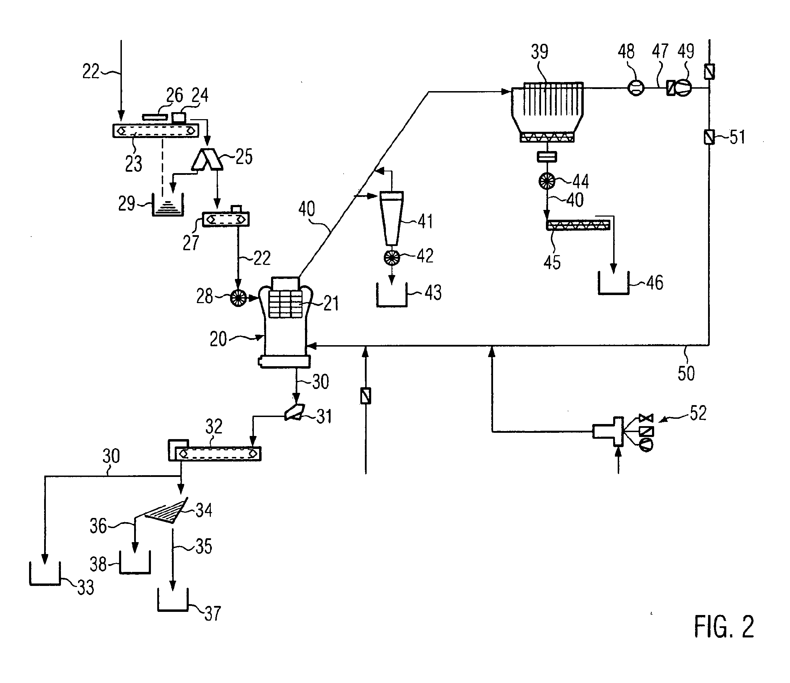

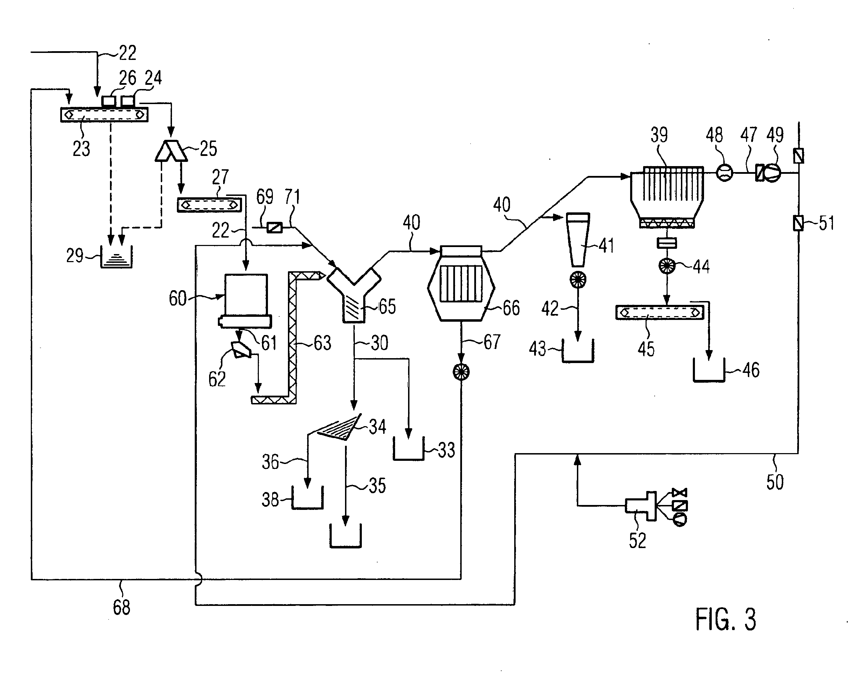

Bei einer Wälzmühle nach dem Überlaufmodus, welche auch als Überlaufmühle bezeichnet wird, gelangt das zerkleinerte Material über den Mahltellerrand beziehungsweise Staurand nach unten und wird aus der Mühle ausgetragen. Die Separation der metallischen Fraktion von der silikatischen Fraktion erfolgt in externen Klassierungs- beziehungsweise Sichtereinrichtungen. Weitere Einzelheiten zu Wälzmühlen im Luftstrommodus beziehungsweise Überlaufmodus werden in Verbindung mit den Figuren 2 und 3 erläutert.

Die Sortierung beziehungsweise Separierung in eine metallische und eine silikatische Fraktion erfolgt aufgrund der unterschiedlichen Rohdichten der beiden Fraktionen. Infolge der selektiven Zerkleinerung in einer Wälzmühle und aufgrund der Unterschiede in der Rohdichte bei vergleichbarer Kornform kann die eigentlich zur Strömungsklassierung eingesetzte Luftsichtung zur Sortierung entsprechend der Dichte eingesetzt werden.

Es wurde überraschenderweise festgestellt, dass im Mahlprozess auf dem Mahlteller beziehungsweise auf der Mahlbahn ein Mahlbett mit einer Schichtung vergleichbar mit einer Schichtung nach der Dichte der Fraktionen gebildet wird. Die Metallpartikel der Metallfraktion, welche weitestgehend unzerkleinert sind, liegen zum überwiegenden Teil in einer kugeligen Form vor. Plattige oder stengelige Metallpartikel können ebenfalls vorkommen. Die Metallpartikel reichern sich auf der Mahlbahn an und bilden eine untere Schicht, während die leichteren Silikatpartikel sich auf der Metallpartikelschicht ablagern.

Bei Einsatz einer Wälzmühle im Luftstrommodus, das heißt, in einer Luftstrom-Wälzmühle, vorzugsweise des LOESCHE-Typs, werden überwiegend die Silikatpartikel sowohl von der inneren Luft- beziehungsweise Gaszirkulation als auch von dem äußeren Luft- oder Gasstrom, welcher über eine Gas- oder eine Luftleitvorrichtung dem Mahlraum zugeführt wird und weitgehend gehäusenah zum Sichter gelangt, erfasst, wenn sie zusammen mit den Metallpartikeln der Metallfraktion am Rand beziehungsweise Staurand des Mahltellers oder einer Mahlschüssel überlaufen.

Die Trennung der Metall- und Silikatpartikel findet nach dem Passieren des Mahlteller-oder Mahlschüsselrandes beziehungsweise des Staurandes auf Grund des hohen Dichteunterschiedes statt. Die silikatische Fraktion mit der geringeren Rohdichte wird mit dem aufsteigenden Luftstrom zum Sichter transportiert .

Vom Sichter abgewiesene Partikel können zu grobe silikatische Partikel sein oder auch noch metallführende Silikatpartikel sein, welche nicht vollständig aufgeschlossen wurden. Durch Versuche wurde festgestellt, dass nach Abschaltung einer Luftstrom-Wälzmühle auf dem Mahlteller eine nahezu reine und somit silikatarme Metallfraktion vorhanden ist. Während des Mahlprozesses verbleibt diese Metallfraktion jedoch nicht auf dem Mahlteller, sondern wird vom nachströmenden Aufgabegut verdrängt. Dementsprechend ist die Aufgabemenge in die Mühle und damit der Durchsatz ein Parameter, um die Verweildauer und damit die Intensität der mechanischen Beanspruchung der Metallpartikel zu beeinflussen. Es wurde festgestellt, dass der Aufschlussgrad der Metallpartikel durch eine längere Verweildauer im Mahlbett bzw. auf dem Mahlteller gesteigert werden kann.

Die Metallpartikel fließen kontinuierlich über den Staurand des Mahltellers beziehungsweise den Mahltellerrand ab und werden ausgetragen.

Die erfindungsgemäße Schichtung auf der Mahlbahn beziehungsweise dem Mahlteller vergleichbar mit einer Schichtung nach der Dichte, wird neben der Ausbildung der Mahlbahn, beispielsweise als Ebene oder mit einer Neigung zum Mühlenzentrum, von der Mahlschüsseldrehzahl, dem Anpressdruck der Mahlwalzen, der Luftmenge und von der Höhe des Staurings bestimmt. Grundsätzlich soll der Stauring, welcher um den Mahlbahnrand angeordnet ist, ein zu schnelles Abfließen des Mahlgutes zu verhindern. Es ist vorteilhaft, dass die Höhe des Staurings verändert werden kann und dadurch eine Anpassung an unterschiedliche Zusammensetzungen von Edelstahlschlacken oder modifizierten Stahlwerksschlacken sowie an die Reinheit der gewünschten Silikat- und Metallfraktionen gewährleistet wird. Neben der Höhe kann auch die Außenkontur beziehungsweise der Querschnitt des Staurings unterschiedlich gestaltet werden, indem beispielsweise von einer gleichbleibenden Stärke des Staurings abgegangen und der Stauring mit einer geneigten Innenwand versehen wird, so dass er einen stärkeren unteren Bereich und einen schmaleren oberen Bereich aufweist. Durch eine Erhöhung des Staurandes wird ein höheres Mahlbett auf dem Mahlteller ausgebildet, welches überwiegend aus der Metallfraktion besteht. Grundsätzlich kann eine Wälzmühle auch mit einer Mahlschüssel beziehungsweise einem Mahlteller ohne einen Staurand eingesetzt werden.

Es ist besonders vorteilhaft, dass bei einer Wälzmühle in Abhängigkeit von der Zusammensetzung der aufgegebenen Edelstahlschlacke beziehungsweise der modifizierten Stahlwerksschlacke auch die Breite und die Geometrie der Mahlwalzen variiert werden kann, um den in das Mahlbett eingetragenen Mahldruck erhöhen oder verringern zu können.

Weiterhin ist es vorteilhaft, wenn der Mahldruck und somit das Maß der mechanischen Beanspruchung der Edelstahlschlacke oder der modifizierten Stahlwerksschlacke stufenlos eingestellt und damit die Produktqualität der Metallfraktion und silikatischen Fraktion bei unterschiedlich zusammengesetzten Edelstahlschlacken beziehungsweise modifizierten Stahlwerksschlacken optimiert werden kann.

Bei einer bevorzugt einzusetzenden LOESCHE-Wälzmühle kann zusammen mit der Zerkleinerung der Edelstahlschlacke beziehungsweise modifizierten Stahlwerksschlacke und dem Freilegen der Metallpartikel eine Trocknung durchgeführt werden, wenn Heißgas, beispielsweise Heißluft, über eine Gas- oder Luftleitvorrichtung dem Mahlraum beziehungsweise, bei Verwendung einer Überlaufmühle, den externen Sichtstufen zugeführt wird. Die Trocknung des Aufgabeguts erhöht die Sichtereffizienz. Eine Agglomeration von Metall- und Silikatpartikeln durch Feuchtigkeit wird damit weitestgehend vermieden. Zudem ist ein trockenes Produkt in Silos handhabbar. Weiterhin wird bei einer nachfolgenden Verwendung der Silikatfraktion, beispielsweise als Zuschlagstoff für die Herstellung von Straßenasphalt, eine separate Trocknungsstufe vermieden.

Es ist vorteilhaft, dass die Silikatfraktion und auch die Metallfraktion nach ihrem Austrag aus der Wälzmühle beziehungsweise einer Luftstrom- oder Überlauf-Wälzmühle einer weiteren Klassierung unterworfen werden kann. Damit wird der Tatsache Rechnung getragen, dass die Metallverteilung in den Fraktionen, insbesondere bei Aufgabe unterschiedlicher Edelstahlschlacken beziehungsweise modifizierter Stahlwerksschlacken, unterschiedlich ist. Beispielsweise kann dem Mühlenaustrag wenigstens ein Sieb als Klassiereinrichtung nachgeschaltet sein, um unterschiedliche Produkte und Produktqualitäten herzustellen.

Es hat sich gezeigt, dass bei der Aufbereitung von Edelstahlschlacken beziehungsweise modifizierten Stahlwerksschlacken in einer Wälzmühle des LOESCHE-Typs die Metallpartikel durch die selektive Zerkleinerung sehr schonend beansprucht werden und dass sie nach dem Aufschluss nahezu ihre ursprüngliche, meist kugelförmige Form beibehalten und nicht deformiert werden. Dies wird unter anderem durch einen einstellbaren und kontrollierbaren Mahldruck gewährleistet. Indem die Metallpartikel überwiegend in einer kugeligen Form vorliegen und nicht deformiert werden, ist die Zerkleinerung beziehungsweise der Aufschluss mit einem geringeren Energieverbrauch und zudem mit einem geringeren Verschleiß der Mahlteile und insbesondere mit einem besseren Fließverhalten auf dem Mahlteller und über den Staurand hinweg verbunden. Die beibehaltene und nicht deformierte Form der Metallpartikel wirkt sich auch vorteilhaft auf die nachfolgende Wiederverwendung im Hüttenprozess aus. Bei einer Wälzmühle des LOESCHE-Typs werden überwiegend Arbeitsdrücke im Bereich von 200 bis 2000 kN/m² bezogen auf die senkrecht auf die Mahlschüssel projizierte Fläche des mittleren Walzendurchmessers realisiert. Es ist vorteilhaft, dass der Anpressdruck der Mahlwalzen und damit die Mahlkraft stufenlos eingestellt und in Abhängigkeit von der aufgegebenen Edelstahlschlacke beziehungsweise modifizierten Stahlwerksschlacke und der gewünschten Qualität der Metallfraktion und Silikatfraktion eingestellt werden kann.

Versuche haben gezeigt, dass die Erhöhung des Arbeitsdruckes zu einer höheren Reinheit der Metallfraktion führt. Wenn allerdings ein kritischer Druck überschritten wird, kommt es zu unerwünschten Verformungen der Metallpartikel.

Der Sichter, welcher in die Wälzmühle integriert und oberhalb des Mahlraumes oder für eine "Down"-Sichtung auch unterhalb des Mahltellerrandes und des Ringraumes in einem unteren Bereich der Mahlschüssel angeordnet sein kann (EP 1 948 360 B1), kann vorteilhaft ein dynamischer Stabkorbsichter, beispielsweise ein LOESCHE-Stabkorbsichter vom Typ LSKS oder LDC, sein, welcher sowohl Kornverteilungen mit enger als auch mit gespreizter Bandbreite produzieren kann. Alternativ können ein oder mehrere Sichter auch außerhalb der Wälzmühle angeordnet sein. Sichter-Rotordrehzahl und der Volumenstrom des Gas-Schlacke-Stroms bestimmen die gewünschten Trennkorndurchmesser der einzelnen Sichter, welche vorteilhaft in weiten Grenzen einstellbar sind.

Es ist vorteilhaft, dass durch eine Hintereinanderschaltung von Sichtern unterschiedliche silikatische Produkte erzeugt werden können, beispielsweise Feinfraktionen mit metallischen Anteilen mit einer Korngröße von < 0,500mm oder silikatische Fraktionen unterschiedlicher Feinheit. Für eine derartige mehrstufige Sichtung können sowohl statische als auch dynamische Sichter eingesetzt werden.

Alternativ zu einer Luftstrom-Wälzmühle mit integriertem Sichter kann eine Wälzmühle auch mit einer externen Sichtung betrieben werden. Es findet dann kein Stofftransport innerhalb der Wälzmühle zum Sichter statt, sondern das zu klassierende beziehungsweise zu sortierende Mahlgut wird nach dem Überlauf vom Mahlteller beziehungsweise von der Mahlschüssel mit mechanischen Förderaggregaten einem oder mehreren dynamischen und/oder statischen Sichtern zugeführt. Eine mehrstufige Sichtung der gemeinsam aufgetragenen Metall- und Silikatfraktion hat die vorstehend beschriebenen Vorteile.

Es wurde festgestellt, dass unter den vom Sichterrotor abgewiesenen Schlacke-Grobpartikeln auch "Verwachsenes" ist, welches über einen Grießekonus des Sichters wieder dem Mahlteller zur nochmaligen Vermahlung zugeführt wird. Offensichtlich unterbindet der Mahlprozess in einer Luftstrom-Wälzmühle eine Übermahlung der Schlackepartikel, indem nach jedem Zerkleinerungs- bzw. Desagglomerationsvorgang unmittelbar eine Klassierung beziehungsweise Sichtung erfolgt. Gleichzeitig wird durch den Sichtvorgang verhindert, dass noch nicht zerkleinertes beziehungsweise ausreichend aufgeschlossenes Aufgabegut ausgetragen wird.

Die Vorteile der Verwendung einer Wälzmühle, insbesondere einer Luftstrom-Wälzmühle des LOESCHE-Typs, können darin gesehen werden, dass mehrere Prozessstufen vereinigt beziehungsweise nahezu gleichzeitig durchgeführt werden können. Es sind dies das Zerkleinern, Desagglomerieren, Trocknen und Sichten, einschließlich des Transportierens. Weitere Vorteile sind die Energieeffizienz und ein geringer Verschleiß sowie die Möglichkeit, in einem Aggregat sowohl eine wiederverwertbare Metallfraktion als auch eine weiter verwendbare Silikatfraktion herstellen zu können. Dabei stellt auch die Silikatfraktion aufgrund ihrer definierten Produktkörnung und Reinheit ein hochwertiges Produkt dar, welches zum Beispiel in der Baustoffindustrie eingesetzt werden kann.

Wesentlich bei der erfindungsgemäßen Zerkleinerung von Edelstahlschlacken und modifizierten Stahlwerksschlacken in einer Wälzmühle ist nicht nur ein TrockenVerfahren zur Edelstahlschlacken- und Stahlwerksschlackenaufbereitung, sondern darüber hinaus auch ein Trocknungsverfahren. Durch das trockene Verfahren entfallen die von der konventionellen nassen Schlackenaufbereitung bekannten Wasserkreisläufe und Entwässerungsstruktur. Hierdurch kommt es nicht zu einer Eluation der in Schlacken enthaltenen Schwermetalle oder anderer Schadstoffe, wie dies bei der Nassvermahlung der Fall sein kann. Gleichzeitig entfallen eine aufwändige Wasseraufbereitung sowie die Behandlung der daraus abgeschiedenen Feststoffe einschließlich einer Entsorgung, und es wird grundsätzlich eine Wassereinsparung erreicht. Wesentlich bei der erfindungsgemäßen Zerkleinerung sind die signifikante Reduzierung der erforderlichen Zerkleinerungsenergie und die Beibehaltung der Form der Metallpartikel, zum Beispiel Edelstahlpartikel, im Vergleich zu den bisher bekannten Verfahren. Indem die Aufbereitungstechnologie auf ein Aggregat begrenzt ist, wird ein vereinfachter Prozess und insgesamt eine Verschleißreduzierung und ursächlich des geringeren Energieverbrauchs eine Senkung des Gesamt-Energieverbrauchs erreicht. Besonders vorteilhaft kann zudem eine online-Kontrolle des Arbeitsdruckes der Mahlwalzen und damit der Mahlkräfte angewendet werden, wodurch eine kontrollierbare und gleichbleibende Qualität der separierten Metall- und Silikatfraktion gewährleistet ist. Insbesondere kann einer veränderten Zusammensetzung der aufzubereitenden Schlacken entsprochen werden. Zudem werden Schwankungen in der Produktqualität der Metall- und Silikatfraktion weitgehend vermieden.

Vorteilhaft können die einer LOESCHE-Wälzmühle innewohnenden konstruktiven und variablen Einflussgrößen - Mühlentyp beziehungsweise Mühlengröße, Sichtertyp(en), Module, Staurand, Mahlwalzenform beziehungsweise Mahldruck, Drehzahl, Mahlschüssel, Aufgabemenge, Sichterdrehzahl, Gasvolumenstrom, Gastemperatur - ausgenutzt werden. Dabei hat die Drehzahl des Mahltellers beziehungsweise der Mahlschüssel Einfluss auf die Durchsatzleistung der Wälzmühle und damit auf den Aufschlussgrad und auf die Produktqualität. Über die Variation der Aufgabemenge kann die Produktqualität ebenfalls beeinflusst werden. Eine Reduzierung der Aufgabemenge führt zu einer längeren Verweilzeit auf der Mahlschüssel und damit zu einer intensiveren Beanspruchung einhergehend mit einem erhöhten Aufschlussgrad und umgekehrt. Der Luft- beziehungsweise Gasvolumenstrom in der Mühle, welcher über ein drehzahlgeregeltes Gebläse stufenlos eingestellt werden kann, bestimmt den Austrag der Metallfraktion als der schwereren Fraktion und die Sichtung der leichteren Silikatfraktion. Bei Aufgabe feuchter Edelstahlschlacken beziehungsweise feuchter modifizierter Stahlwerksschlacken kann ein Heißgaserzeuger eingesetzt und eine Mahltrocknung durchgeführt werden.

Die Erfindung wird nachstehend anhand einer Zeichnung und durchgeführter Versuche weiter erläutert. In der Zeichnung zeigen
- Fig. 1: einen schematisierten Ausschnitt einer Luftstrom-Wälzmühle des LOESCHE-Typs zur erfindungsgemäßen Aufbereitung von Edelstahlschlacken und modifizierten Stahlwerksschlacken mit einer Schichtung auf der Mahlschüssel vergleichbar mit einer Schichtung nach der Dichte;
- Fig. 2: ein Anlagenschema mit einer Luftstrom-Wälzmühle des LOESCHE-Typs gemäß Fig. 1 zur Durchführung des erfindungsgemäßen Aufbereitungsverfahrens und
- Fig. 3: ein Anlagenschema mit einer Wälzmühle des LOESCHE-Typs im Überlaufmodus zur Durchführung des erfindungsgemäßen Aufbereitungsverfahrens.

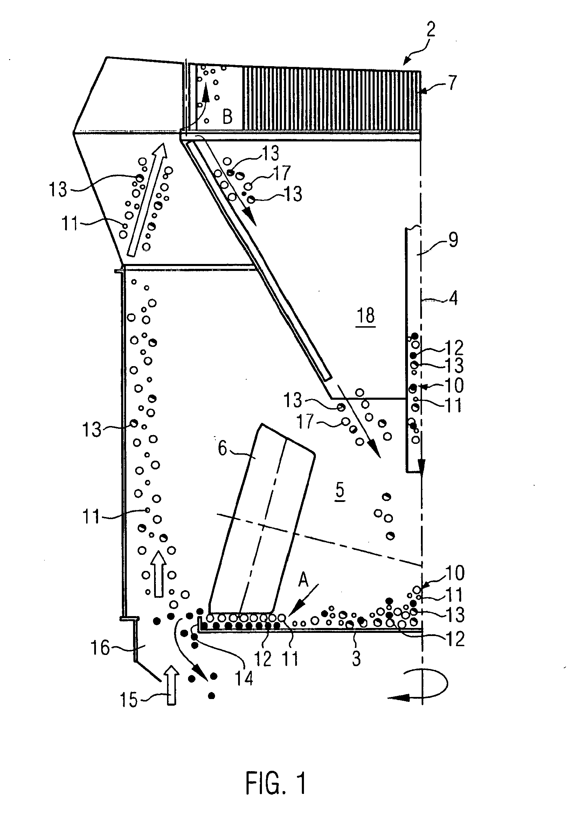

Fig. 1 zeigt ausschnittsweise eine Luftstrom-Wälzmühle 2 des LOESCHE-Typs mit einem horizontal angeordneten, ebenen Mahlteller 3, welcher um eine vertikale Mühlenachse 4 in einem Mahlraum 5 rotiert und auf welchem Mahlwalzen 6 abrollen. In die Luftstrom-Wälzmühle 2 integriert ist ein Sichter 7, welcher über dem Mahlraum 5 angeordnet ist. In diesem Beispiel ist es ein Stabkorbsichter.

Der Luftstrom-Wälzmühle 2 wird über eine zentrale Zuführung 9 (alternativ auch über eine seitliche Zuführung, nicht dargestellt) als Aufgabegut 10 Edelstahlschlacke oder modifizierte Stahlwerksschlacke mit einer Aufgabekörnung von vorzugsweise < 150 mm aufgegeben, welche überwiegend aus einer Silikatfraktion 11, einer Metallfraktion 12 beziehungsweise Metallpartikeln in Form von Metallkugeln oder Granalien und aus Verwachsungen 13 aus Metall und einer Silikatmatrix besteht.

Auf dem Mahlteller 3 wandert das Aufgabegut 10 in Folge der Zentrifugalkräfte zum Mahltellerrand und gelangt dabei unter die hydropneumatisch gefederten Mahlwalzen 6, von denen in Fig. 1 lediglich eine Mahlwalze gezeigt ist.

Aufgrund des Dichteunterschieds zwischen der Silikatfraktion 11 und der Metallfraktion 12 bildet sich auf dem Mahlteller 3 eine Dichteschichtung aus, welche eine untere Schicht, bestehend aus den im Mahlprozess aufgeschlossenen Partikeln der Metallfraktion 12, und eine obere Schicht, bestehend aus den leichteren Partikeln der Silikatfraktion 11, aufweist. Mit Pfeil A soll deutlich gemacht werden, dass aufgrund der Fliehkraftwirkung infolge der Rotation des Mahltellers 3 sowohl die untere Metallfraktion 12 als auch die darüber liegende Silikatfraktion 11 über einen Staurand 14 am Umfang des Mahltellers 3 drängt und in den Einfluss eines nach oben gerichteten Gasstroms gelangt. Dabei wird die leichtere Silikatfraktion 11 von dem aufsteigenden Gasstrom 15, welcher über einen Ringkanal 16 mit nicht dargestelltem Düsenkranz als Gas- und Luftleiteinrichtung in den Mahlraum 5 gelangt, mitgerissen. Mit dem Gasstrom 15 werden nicht nur die als hohl dargestellten Partikel der Silikatfraktion 11, sondern auch Verwachsungen 13, das heißt, Silikatpartikel mit Metallanteilen, dem Sichter 7 zugeführt. Im Sichter 7 erfolgt eine Abtrennung des Feinanteils der Silikatfraktion 11, welche nach oben (siehe Pfeil B) über einen Feingutaustrag (nicht dargestellt) ausgeführt wird. Grobpartikel 17 der Silikatfraktion 11 und Verwachsungen 13 sowie feine Partikel 19 der Metallfraktion 12 werden im Sichter 7 abgewiesen und fallen durch einen Grießekonus 18 auf den Mahlteller 3 zurück.

Die im Mahlprozess aufgeschlossenen Metallpartikel der Metallfraktion 12 verbleiben nicht auf dem Mahlteller 3, sondern werden ebenfalls über den Staurand 14 nach außen befördert. Aufgrund ihrer größeren Dichte gelangen die Metallpartikel der Metallfraktion 12 unter Schwerkraftwirkung in den Ringkanal 16 und über einen Austrag (nicht dargestellt) aus der Mühle.

Das Anlagenschema der Fig. 2 zeigt ein Beispiel eines typischen Anlagenaufbaus mit einer LOESCHE-Wälzmühle 20 im Luftstrommodus mit aufgesetztem beziehungsweise integriertem Sichter 21. Diese Wälzmühle wird auch als Luftstrom-Wälzmühle bezeichnet. Als Aufgabegut 22 gelangt Edelstahlschlacke oder auch modifizierte Stahlwerksschlacke auf ein Förderaggregat 23. Über dem Förderaggregat 23 ist ein Metalldetektor 24 installiert, um größere Metallstücke vor der Aufgabe in die Wälzmühle 20 dem Aufgabegut zu entziehen. Die detektierten Materialien werden über eine Hosenschurre 25 einem Silo 29 zugeführt.

Optional kann über dem Förderaggregat 23 erforderlichenfalls ein Magnetscheider 26, z. B ein Überbandmagnetabscheider, vorgesehen sein.

Das Aufgabegut 22 gelangt über ein Dosierband 27 in die Wälzmühle 20. Ein Luftabschluss der Wälzmühle 20 wird zum Beispiel durch eine Zellenradschleuse als ein mechanischer Luftabschluss 28 in einer Aufgabeschurre sichergestellt. In der Luftstrom-Wälzmühle 20 erfolgt die Vermahlung und Desagglomeration des Aufgabeguts und gleichzeitig die Sichtung beziehungsweise Separierung in eine Metallfraktion und Silikatfraktion. Für die Vermahlung, Desagglomeration und Sichtung beziehungsweise Separierung ist somit nur eine Vorrichtung erforderlich.

Die über den Staurand des Mahltellers (siehe auch Fig. 1) transportierten Partikel der Metallfraktion 30 gelangen über ein Austragsorgan 31 und ein Förderband 32 in ein Metallfraktionssilo 33. Erforderlichenfalls können in diesen Materialstrom optional noch ein Klassieraggregat 34 oder mehrere Klassieraggregate (nicht dargestellt) zwischengeschaltet werden, um bestimmte Metallfraktionen, zum Beispiel eine feinere Metallfraktion 35 und eine grobere Metallfraktion 36, separat zu gewinnen, welche dann nach der Klassierung in ein entsprechendes Silo 37, 38 gelangen.

Die Silikatfraktion 40 beziehungsweise die staubförmige Silikatmatrix verlässt den Sichter 21 und wird in einem nachgeschalteten Filter 39 abgeschieden. Optional kann eine Kombination aus einem Zyklon 41 beziehungsweise einer Zyklonbatterie und einem Filter 39 vorgesehen sein. Der Zyklon 41 hat die Funktion, eventuell noch in der silikatischen Matrix 40 enthaltene Metallpartikel 42 mit dem Grobgut abzutrennen, welche in ein Silo 43 ausgeschleust werden. Das Feingut aus dem Zyklon 41 oder einer Zyklonbatterie wird im Filter 39 entstaubt.

Die Materialströme der staubförmigen Silikatmatrix 40 nach dem Filter 39 gelangen über ein Austragsorgan 44 und eine Produktfördereinrichtung 45 in ein entsprechendes Produktsilo 46.

Der nach dem Filter 39 vorhandene Prozessgasstrom 47 passiert einen Volumenstrommesser 48 und gelangt zu einem Mühlenventilator 49, der im Allgemeinen mit einem drehzahlgeregelten Antrieb ausgerüstet ist.

Ein Großteil des Prozessgases 47 wird zur Nutzung seines Wärmeinhaltes über eine Rückgasleitung 50 mit Rückgasklappe 51 wieder zur Luftstrom-Wälzmühle 20 zurück geleitet. Der restliche Teil des Prozessgases 47 verlässt die Anlage über einen Kamin (nicht dargestellt).

Wenn die Feuchte des zu mahlenden Aufgabegutes es erfordert, kann zusätzliche Wärme durch einen Heißgaserzeuger 52 bereitgestellt werden. Das Heißgas wird in die Rückgasleitung 50 eingespeist und mit dem rückgeführten Prozessgas vermischt und der Luftstrom-Wälzmühle 20 zugeleitet.

Eine Anlagenschaltung in ihrem prinzipiellen Aufbau zur Durchführung des erfindungsgemäßen Aufbereitungsverfahrens unter Verwendung einer LOESCHE-Wälzmühle im sogenannten Überlaufmodus als Variante der LOESCHE-Mahltechnologie zeigt Fig. 3.

Die Zuführung des Aufgabegutes 22 erfolgt weitgehend wie bei der Anlage nach Fig. 2. Für identische Merkmale wurden identische Bezugszeichen verwendet.

Aufzubereitende Edelstahlschlacke oder modifizierte Stahlwerksschlacke wird als Aufgabegut 22 einem Förderaggregat 23 aufgegeben. Über dem Förderband 23 ist ein Metalldetektor 24 installiert, um größere Metallstücke vor der Aufgabe in eine Wälzmühle 60 im Überlaufmodus dem Aufgabegut 22 zu entziehen. Optional kann über dem Förderband 23 ein Magnetscheider 26, z. B. ein Überbandmagnetscheider, vorgesehen sein, sofern dies das Verfahren erfordert. Die detektierten beziehungsweise abgeschiedenen Materialien gelangen über eine Hosenschurre 25 in ein Silo 29 für Fremdmaterialien. Das Aufgabegut 22 gelangt über ein Dosierband 27 in die Überlauf-Wälzmühle 60.

In der Überlauf-Wälzmühle 60 erfolgt eine trockene Zerkleinerung des Aufgabegutes 22. Das gesamte zerkleinerte und desagglomerierte Mahlgut 61 wird über einen Mahltellerrand beziehungsweise Staurand des Mahltellers beziehungsweise einer Mahlschüssel transportiert und über einen unteren Mühlenaustrag ausgetragen und gelangt über ein Austragsorgan 62 und eine Fördereinrichtung 63 zu einem Sichter 65, welcher in diesem Ausführungsbeispiel ein statischer Sichter ist. In dem statischen Sichter 65 wird die Metallfraktion 30 von der SiSikatfraktion 40 getrennt.

Die abgeschiedene Metallfraktion 30 wird von einem Silo 33 aufgenommen. Wenn es für erforderlich gehalten wird, können in den Materialstrom der Metallfraktion 30 optional noch ein Sieb oder mehrere Klassieraggregate 34 geschaltet werden, um mehrere Metallfraktionen 35, 36 herzustellen, welche jeweils einem Silo 37, 38 zugeführt werden.

Den statischen Sichter 65 verlässt ein im Wesentlichen aus der Silikatfraktion 40 bestehender Materialstrom, welcher einem weiteren Sichter, beispielsweise einem dynamischen Sichter 66 zugeführt wird. In diesem dynamischen Sichter 66 werden noch nicht ausreichend aufgemahlene Partikel der Silikatfraktion 40 als Grobkorn 67 abgeschieden und über eine Grobkornrückführungsleitung 68 dem Aufgabegut 22 und damit der Überlaufmühle 60 wieder zugeführt.

Die staubförmige Silikatfraktion 40 verlässt den dynamischen Sichter 66 und wird in einem nachgeschalteten Filter 39 oder optional in einer Kombination aus einem Zyklon 41 beziehungsweise einer Zyklonbatterie und einem Filter 39 abgeschieden. Im Zyklon 41 werden eventuell noch in der silikatischen Fraktion 40 enthaltene Metallpartikel 42 abgetrennt und einem Silo 43 zugeführt.

Die Produkte aus der Silikatfraktion 40 gelangen nach dem Filter 39 über ein Austragsorgan 44 und eine Produktfördereinrichtung 45 in ein Silo 46.

Analog zu der Variante mit einer Wälzmühle im Luftstrommodus der Fig. 2 ist der Weg des Prozessgases 47. Nach dem Filter 39 folgen ein Volumenstrommesser 48 und ein Mühlengebläse 49 mit einem drehzahlgeregelten Antrieb. Ein Teil des Prozessgases 47 verlässt über einen Kamin (nicht dargestellt) die Anlage. Über eine Rückgasleitung 50 und eine darin angeordnete Regelklappe 51 wird Prozessgas 47 einem Einlass des statischen Sichters 65 zugeleitet. Bei erhöhter Materialfeuchte wird ein Heißgaserzeuger 52 zugeschaltet. Frischluft 69 als Prozessluft wird über einen Stutzen 71 mit Klappe 72 in den statischen Sichter 65 angesaugt.

Es wurden Versuche im Technikumsmaßstab durchgeführt.

Das Ziel der in einer Labormühle der Firma LOESCHE GmbH durchgeführten Versuche bestand zunächst darin, die generelle Eignung einer Wälzmühle des LOESCHE-Typs für die Aufbereitung von Edelstahlschlacken beziehungsweise Stahlwerksschlacken zwecks Metallrückgewinnung nachzuweisen.

Nachdem die generelle Eignung festgestellt worden war, wurden die Prozessparameter der Wälzmühle so eingestellt, dass ein erhöhter Metallgehalt in der Edelstahlfraktion bei gleichzeitiger Senkung des Metallgehaltes in der silikatischen Fraktion erreicht wurde.

Für die Versuche wurde eine Edelstahlschlacke eingesetzt, bei welcher es sich um eine vorangereicherte Edelstahlschlacke handelte. Dies bedeutet, dass der Edelstahlanteil mittels eines Sortierprozesses von ca. 5 auf ca. 25 bis 35 Gew.-% Metall angereichert wurde.

Die Aufgabekörnung betrug 0 bis 4 mm, die Aufgabefeuchte betrug 8 bis 15 Gew.-% und der Metallgehalt im Aufgabegut 25 bis 35 Gew.-%.

Die Mahlversuche zur erfindungsgemäßen Aufbereitung der Edelstahlschlacke wurden entsprechend dem Anlagenschema der Fig. 2 durchgeführt. Folgende Prozessparameter und konstruktive Parameter waren für die Einstellung der Labormühle relevant und wurden teilweise während der Versuche in der nachfolgend aufgeführten Bandbreite variiert:

| | |
|---|---|
| 1. Arbeitsdruck: | von 200 bis 2000 N/m² (bezogen auf die senkrecht auf die Mahlschüssel projizierte Fläche des mittleren Walzendurchmessers) |
| 2. Mahlschüsseldrehzahl: | wurde nicht variiert |
| 3. Sichterdrehzahl: | von 600 bis 20 U / min ⁻¹ |
| 4. Prozessgasvolumenstrom: | 1000 - 2200 m³/h (Betriebszustand) |
| 5. Temperatur nach Mühle: | konstant (ca. 90°C) |
| 6. Staurandhöhe | 4 - 20mm |

Folgende Versuchsergebnisse wurden festgestellt:

### Produktkörnungen:

| | |
|---|---|
| 1. Metallfraktion | 0 - 4mm |
| 2. Silikatfraktion | 5 - 50 Gew.-% Rückstand bezogen auf 63µm |

**Tabelle 1: Versuchsergebnisse Metallausbringen und -Gehalte**

| | | Versuch 1 | Versuch 2 | Versuch 3 | Versuch 4 | Versuch 5 | Versuch 6 |
|---|---|---|---|---|---|---|---|
| Metallgehalt im Aufgabegut (vorangereicherte Edelstahlschlacke) | Gew.% | 30,16 | 35,67 | 37,68 | 39,44 | 31,61 | 32,56 |
| Metallgehalt in der metallischen Fraktion | Gew.-% | 76,85 | 84,21 | 90,33 | 87,49 | 57,85 | 56,84 |
| Metallgehalt in der Silikatfraktion | Gew.-% | 2,10 | 3,10 | 2,60 | 2,30 | 0,50 | 0,30 |
| Metall-Ausbringen (Gesamt) | Gew.-% | **90,60** | **91,77** | **94,53** | **95,38** | **98,39** | **97,56** |

Es wurde gefunden, dass der Metallgehalt der Metallfraktion mit feiner werdender Körnung abnimmt. Durch eine Klassierung und damit Abtrennung der Feinfraktion kann der Metallgehalt in der verbleibenden groben Metallfraktion signifikant erhöht werden.

Die Silikatfraktion, die aus dem Sichter ausgetragen wird, enthält noch einen gewissen Metallanteil. Durch Einstellmöglichkeiten der Wälzmühle und vor allem über den Prozessgasvolumenstrom und Sichterparameter konnte die Produktreinheit der Silikatfraktion verbessert werden.

Bei den Mahlversuchen wurde festgestellt, dass der optimale Arbeitsdruck im Bereich von 400 bis 1200 kN/m² liegt, je nach Schlackenprobe, dem Grad der Verwachsungen, dem angestrebten Reinheitsgrad der Metall- und Silikatfraktionen und der Produktkörnung der Silikatfraktion.

Es wurde gefunden, dass bei einer Reduzierung des Durchsatzes die Reinheit in der Metallfraktion ansteigt. Durch einen geringeren Durchsatz wird die Verweilzeit der Metallpartikel auf der Mahlschüssel beziehungsweise dem Mahlteller verlängert. Damit wird die mechanische Beanspruchung auch bei gleichbleibendem Arbeitsdruck erhöht und somit Restanhaftungen von silikatischer Matrix am Metallpartikel entfernt.

Es ist vorteilhaft, dass in Abhängigkeit von den gewünschten Produktqualitäten der Anteil der Scherkräfte, welche von den Mahlteilen bzw. Mahlwerkzeugen in das Mahlgut eingebracht werden, eingestellt und eine Druckzerkleinerung mit Scheranteil oder eine scherfreie Druckzerkleinerung (siehe EP 1 554 046 A1) gewählt werden kann.

## Patentansprüche

1. Aufbereitungsverfahren für Edelstahlschlacken und Stahlwerksschlacken zur Metallrückgewinnung,
bei welchem die Edelstahlschlacken oder Stahlwerksschlacken einem trockenen Zerkleinerungs-, Desagglomerier-, Klassier- und Sortierprozess zugeführt und eine Metallfraktion und wenigstens eine Silikatfraktion erzeugt werden, wobei die Stahlwerksschlacken zuvor chemisch einer reduktiven Behandlung unterzogen wurden und als modifizierte Stahlwerksschlacken zugeführt werden,
wobei für die Zerkleinerung und Desagglomeration eine Wälzmühle mit einer Mahlbahn und auf einem Mahlbett abrollenden Mahlwalzen verwendet wird wobei der Wälzmühle Edelstahlschlacken oder modifizierte Stahlwerksschlacken mit einer Aufgabekörnung bis maximal 150 mm aufgegeben wird und
wobei die Zerkleinerung und Desagglomeration abhängig von der Schlackenart, dem Metallgehalt der Schlacke, dem Grad der Verwachsungen und dem angestrebten Reinheitsgrad der Metall- und Silikatfraktionen und der Produktkörnung mit einem Arbeitsdruck im Bereich von 150 bis 4500 kN/m², bezogen auf die senkrecht auf die Mahlschüssel projizierte Fläche des mittleren Walzendurchmessers, unter Beibehaltung der Form der Metallpartikel durchgeführt wird.

2. Verfahren nach Anspruch 1,
**dadurch gekennzeichnet,**
**dass** eine Wälzmühle-Sichter-Kombination verwendet wird, in welcher die Zerkleinerung und Desagglomeration und erforderlichenfalls eine Trocknung sowie die Separierung in die Metallfraktion und Silikatfraktion durchgeführt wird.

3. Verfahren nach Anspruch 2,
**dadurch gekennzeichnet,**
**dass** für die Zerkleinerung, Desagglomeration, Klassierung, Sortierung und Trocknung eine Luftstrom-Wälzmühle mit integriertem Sichter verwendet wird und dass die Metallfraktion nach einer Anreicherung der freien und aufgeschlossenen Metallpartikel auf einer Mahlschüssel oder einem Mahlteller und einem Transport über einen Mahlschüssel- oder Mahltellerrand oder einen Staurand der Mahlschüssel oder des Mahltellers nach unten kontinuierlich abgeführt und damit von der Silikatfraktion getrennt wird.

4. Verfahren nach Anspruch 1,
**dadurch gekennzeichnet,**
**dass** für die Zerkleinerung, Desagglomeration und Klassierung eine Wälzmühle im Überlaufmodus mit externer Klassierung und Sortierung verwendet wird und
**dass** eine Mischung aus freien und aufgeschlossenen Metallpartikeln der Metallfraktion und Partikeln der Silikatfraktion über einen Mahlteller- beziehungsweise Mahlschüsselrand oder einen Staurand transportiert und mit Hilfe einer Fördereinrichtung einem Sichter oder einer Sichterkombination zugeführt und in die Metallfraktion und Silikatfraktion getrennt werden.

5. Verfahren nach Anspruch 3,
**dadurch gekennzeichnet,**
**dass** die Silikatfraktion und feine Metallpartikel sowie Verwachsenes pneumatisch zum Sichter transportiert und genügend zerkleinerte Partikel als Feingut ausgetragen werden, während die gröberen Partikel der Silikatfraktion und feine Metallpartikel sowie Verwachsenes vom Sichter abgewiesen und dem Mahlteller zur weiteren Zerkleinerung und Desagglomeration wieder zugeführt werden.

6. Verfahren nach Anspruch 4,
**dadurch gekennzeichnet,**
**dass** das aus der Überlauf-Wälzmühle ausgetragene Mahlgut aus einer Mischung aus freien und verwachsenen Metallpartikeln und Partikeln der Silikatfraktion einem Sichter zugeführt wird und
**dass** die Silikatfraktion im Wesentlichen metallfrei in einem Gasstrom einem dynamischen Sichter zur Abtrennung einer feinen Silikatfraktion von Grobkorn aufgegeben wird, während die Metallfraktion abgeführt und gegebenenfalls noch einem Klassieraggregat oder Klassieraggregaten zur Abtrennung grober Metallpartikel von feineren Metallpartikeln zugeführt wird.

7. Verfahren nach Anspruch 5 oder 6,
**dadurch gekennzeichnet,**
**dass** die Körnung der Silikatfraktion stufenlos eingestellt wird und im Bereich von normalerweise kleiner 5 mm und einer Feinheit von 3500 bis 15000 Blaine liegt.

8. Verfahren nach einem der vorhergehenden Ansprüche,
**dadurch gekennzeichnet,**
**dass** ein Mahlteller mit einem Staurand mit vorgebbarer Höhe und Querschnittsprofil verwendet wird und
**dass** ein Mahlteller mit einem Staurand verwendet wird, dessen Höhe im Bereich von 0 bis 160 mm liegt.

9. Verfahren nach einem der vorhergehenden Ansprüche,
**dadurch gekennzeichnet,**
**dass** die Wälzmühle so betrieben wird, dass im Mahlprozess auf der Mahlbahn ein Mahlbett mit einer Schichtung vergleichbar mit einer Schichtung nach der Dichte gebildet wird, bei welcher eine untere Schicht von weitestgehend unzerkleinerten und sich auf der Mahlbahn anreichernden Metallpartikeln und eine obere Schicht von den leichteren Silikatpartikeln gebildet wird.

10. Verfahren nach einem der vorhergehenden Ansprüche,
**dadurch gekennzeichnet,**
**dass** die über den Staurand abgeführte und in wenigstens einem Rejekt-Austrag bzw. mittels einer Austragsvorrichtung aus einer Luftstrom-Wälzmühle mit integriertem Sichter ausgetragene Metallfraktion beziehungsweise die aus einem einer Überlauf-Wälzmühle nachgeschalteten Sichter ausgetragene Metallfraktion einer Klassierung unterworfen und als ein getrenntes Produkt beziehungsweise Zwischenprodukt abgeschieden wird.

11. Verfahren nach einem der vorhergehenden Ansprüche,
**dadurch gekennzeichnet,**
**dass** in einer Luftstrom-Wälzmühle die Prozessstufen Zerkleinern, Desagglomerieren, Sichten beziehungsweise Klassieren, Sortieren und Transportieren, gegebenenfalls auch Trocknen, vereinigt werden beziehungsweise in einer Überlauf-Wälzmühle die Prozessstufen Zerkleinern und Desagglomerieren durchgeführt und extern die Prozesse Sichten beziehungsweise Klassieren, Sortieren und gegebenenfalls Trocknen durchgeführt werden, und auf diese Weise mit einer weitgehend silikatfreien Metallfraktion und einer nahezu metallfreien Silikatfraktion hochwertige Produkte einer definierten Körnung und Reinheit erzeugt werden.

12. Verfahren nach einem der vorhergehenden Ansprüche,
**dadurch gekennzeichnet,**
**dass**, der Metallgehalt der Edelstahlschlacken beziehungsweise der modifizierten Stahlwerksschlacken zwischen 2 und 30 Gew.-% liegt.

13. Verfahren nach einem der vorhergehenden Ansprüche,
**dadurch gekennzeichnet,**
**dass** der Aufschlussgrad der Metallpartikel über die Verweilzeit des Mahlgutes auf der Mahlschüssel und den Grad der mechanischen Beanspruchung eingestellt und dies über die Einstellung des Arbeitsdrucks, der Aufgabemenge, der Drehzahl der Mahlschüssel und der Staurandhöhe geregelt wird.

14. Verfahren nach einem der vorhergehenden Ansprüche,
**dadurch gekennzeichnet,**
**dass** mit Hilfe des Volumenstroms und der Sichtereinstellung, der Austrag der Metallpartikel und die Sichtung der Silikatfraktion eingestellt wird und/oder dass Anteile oder die Gesamtmenge der von einem Sichter abgewiesenen Grobgutpartikel über ein zusätzliches Austragsorgan abgezogen und einer weiteren Anreicherungsstufe zugeführt werden.

15. Verfahren nach einem der vorhergehenden Ansprüche,
**dadurch gekennzeichnet,**
**dass** in Abhängigkeit von den gewünschten Produktqualitäten der Anteil der Scherkräfte, welche von den Mahlwerkzeugen in das Mahlgut eingebracht werden können, eingestellt und eine Druckzerkleinerung mit Scheranteil oder eine scherfreie Druckzerkleinerung durchgeführt wird.

## Claims

1. Preparation method for stainless steel slags and steelworks slags for recovery of metal,
wherein the stainless steel slags or steelworks slags are fed to a dry comminution, de-agglomeration, screening and sorting process and a metal fraction and at least one silicate fraction are produced, whereby the steelworks slags have previously been chemically subjected to a reductive treatment and are fed as modified steelworks slags,
wherein a roller mill with a grinding track and grinding rollers rolling on a grinding bed is used for the comminution and de-agglomeration,
wherein stainless steel slags or modified steelworks slags with a feed grain size of up to a maximum of 150 mm are fed to the roller mill and
wherein the comminution and de-agglomeration are carried out in dependence upon the slag type, the metal content of the slag, the degree of adhesions and the desired purity level of the metal and silicate fractions and the product grain size at an operating pressure in the range of from 150 to 4500 kN/m² in relation to the area of the average roller diameter projected perpendicularly onto the grinding pan, while retaining the form of the metal particles.

2. Method according to claim 1,
**characterised in that**
a roller mill-classifier combination is used, in which the comminution and de-agglomeration and, if necessary, drying and separating into the metal fraction and silicate fraction are carried out.

3. Method according to claim 2,
**characterised in that**
an air swept roller mill with an integrated classifier is used for the comminution, de-agglomeration, screening, sorting and drying and
after an enrichment of the free and broken down metal particles on a grinding pan or a grinding plate and transport via a grinding pan or grinding plate edge or a retention rim of the grinding pan or the grinding plate the metal fraction is continuously removed downwards and thus separated from the silicate fraction.

4. Method according to claim 1,
**characterised in that**
a roller mill in the overflow mode with external screening and sorting is used for the comminution, de-agglomeration and screening and
a mixture of free and broken down metal particles of the metal fraction and particles of the silicate fraction are transported via a grinding plate or grinding pan edge or a retention rim and fed using a conveyor device to a classifier or a classifier combination and separated into the metal fraction and silicate fraction.

5. Method according to claim 3,
**characterised in that**
the silicate fraction and fine metal particles as well as adhesions are transported pneumatically to the classifier and sufficiently reduced particles are discharged as fine material while the coarser particles of the silicate fraction and fine metal particles as well as adhesions are rejected by the classifier and fed back to the grinding plate for further comminution and de-agglomeration.

6. Method according to claim 4,
**characterised in that**
the grinding material discharged from the overflow mill and comprising a mixture of free and adhered metal particles and particles of the silicate fraction is fed to a classifier and the silicate fraction is fed essentially metal free in a gas flow to a dynamic classifier for separation of a fine silicate fraction from coarse grain while the metal fraction is removed and possibly further fed to a screening aggregate or to screening aggregates for separation of coarse metal particles from finer metal particles.

7. Method according to claim 5 or 6,
**characterised in that**
the grain size of the silicate fraction is progressively adjusted and lies in the range of normally smaller than 5 mm and with a fineness of 3500 to 15000 Blaine.

8. Method according to one of the preceding claims,
**characterised in that**
a grinding plate is used with a retention rim with pre-definable height and cross-section profile and
a grinding plate is used with a retention rim, the height of which lies in the range of from 0 to 160 mm.

9. Method according to one of the preceding claims,
**characterised in that**
the roller mill is operated such that in the grinding process a grinding bed is formed on the grinding track with a layering comparable with a layering according to density, wherein a lower layer is formed by extensively uncomminuted metal particles enriching on the grinding track and an upper layer is formed by the lighter silicate particles.

10. Method according to one of the preceding claims,
**characterised in that**
the metal fraction removed via the retention rim and discharged in at least one reject discharge or by means of a discharge device from an air swept roller mill with integrated classifier or the metal fraction discharged from a classifier arranged downstream of an overflow roller mill is subjected to a screening and separated as a separate product or intermediate product.

11. Method according to one of the preceding claims,
**characterised in that**
in an air swept roller mill the process stages of comminuting, de-agglomeration, classifying and/or screening, sorting and transportation, possibly also drying, are brought together or in an overflow roller mill the process stages of comminution and de-agglomeration are carried out and the processes of classifying and/or screening, sorting and possibly drying are carried out externally and in this way high quality products of a defined grain size and purity are produced with an extensively silicate-free metal fraction and a virtually metal-free silicate fraction.

12. Method according to one of the preceding claims,
**characterised in that**
the metal content of the stainless slags and/or the modified steel slags is between 2 and 30% by weight.

13. Method according to one of the preceding claims,
**characterised in that**
the degree of breaking-down of the metal particles is adjusted via the dwell time of the grinding material on the grinding pan and the level of mechanical stress and this is controlled via the adjustment of the working pressure, the feed quantity, the rotation speed of the grinding pan and the retention rim height.

14. Method according to one of the preceding claims,
**characterised in that**
using the volume flow and the classifier setting, the discharge of the metal particles and classifying of the silicate fraction are set and/or
portions or the whole quantity of the coarse material particles rejected by a classifier are removed via an additional discharge element and fed to a further enrichment stage.

15. Method according to one of the preceding claims,
**characterised in that**
in dependence upon the desired product qualities the portion of shear forces which can be incorporated by the grinding tools into the grinding material is set and a pressure comminution with shear portion or a shear-free pressure comminution is carried out.

## Revendications

1. Procédé de traitement de scories d'acier inoxydable et de scories d'aciéries en vue de la récupération de métaux,
avec lequel les scories d'acier inoxydable ou les scories d'aciéries sont acheminées vers un processus de réduction à sec, de désagglomération, de criblage et de tri, et une fraction métallique et au moins une fraction silicatée sont produites, les scories d'aciéries étant préalablement soumises par voie chimique à un traitement de réduction et étant acheminées en tant que scories d'aciéries modifiées,
selon lequel un broyeur à rouleaux muni d'une piste de broyage et de rouleaux qui roulent sur un lit de broyage est utilisé pour la réduction et la désagglomération,
selon lequel des scories d'acier inoxydable ou des scories d'aciéries modifiées ayant une granulométrie de départ allant jusqu'à 150 mm au maximum sont transférées au broyeur à rouleaux, et
selon lequel la réduction et la désagglomération sont mises en oeuvre en fonction du type de scories, de la teneur en métaux des scories, du degré d'adhérence et du degré de pureté recherché des fractions métallique et silicatée, et de la granularité du produit, avec une pression de travail située dans la gamme comprise entre 150 et 4500 kN/m², par rapport à la surface, projetée perpendiculairement au plateau de broyage, du diamètre moyen des rouleaux, tout en maintenant la forme des particules de métal.

2. Procédé selon la revendication 1,
**caractérisé :**
**en ce qu'**on utilise une combinaison d'un broyeur à rouleaux et d'un dispositif de séparation, dans laquelle la réduction et la désagglomération et, en cas de besoin, un séchage ainsi que la séparation sont mis en oeuvre dans la fraction métallique et la fraction silicatée.

3. Procédé selon la revendication 2,
**caractérisé :**
**en ce que**, pour la réduction, la désagglomération, le criblage, le tri et le séchage, un broyeur à rouleaux à flux d'air avec un dispositif de séparation intégré est utilisé, et
**en ce que**, après un enrichissement des particules de métal libres et disponibles sur un plateau de broyage ou une plaque de broyage et un transport sur un bord du plateau de broyage ou un bord de la plaque de broyage ou sur un bord de retenue du plateau de broyage ou de la plaque de broyage, la fraction métallique est évacuée vers le bas de manière continue et est alors séparée de la fraction silicatée.

4. Procédé selon la revendication 1,
**caractérisé :**
**en ce que**, pour la réduction, la désagglomération et le criblage, le tri et le séchage, un broyeur à rouleaux en mode de trop-plein avec criblage et tri externes est utilisé, et
**en ce qu'**un mélange à partir de particules de métal libres et disponibles de la fraction métallique et de particules de la fraction silicatée est transporté sur un bord de la plaque de broyage ou respectivement du plateau de broyage ou sur un bord de retenue et, à l'aide d'un dispositif de transport, est acheminé vers un dispositif de séparation ou un dispositif comprenant en combinaison un séparateur puis est séparé en la fraction métallique et la fraction silicatée.

5. Procédé selon la revendication 3,
**caractérisé :**
**en ce que** la fraction silicatée et des particules de métal fines ainsi que celles qui adhèrent sont transportées par voie pneumatique vers le dispositif de séparation et les particules suffisamment réduites sont évacuées en tant que particules fines, tandis que les particules plus grosses de la fraction silicatée et des particules de métal fines ainsi que de celles qui adhèrent sont rejetées et sont à nouveau acheminées vers la plaque de broyage pour de nouvelles réduction et désagglomération.

6. Procédé selon la revendication 4,
**caractérisé :**
**en ce que** la matière à broyer évacuée du broyeur à rouleaux à trop-plein et qui provient d'un mélange formé de particules de métal libres et de celles qui adhèrent et de particules de la fraction silicatée est acheminée vers un dispositif de séparation, et
**en ce que** la fraction silicatée essentiellement libre de métal est fournie dans un flux de gaz à un dispositif de séparation dynamique pour la séparation d'une fraction silicatée fine par rapport aux grains de gros calibre, pendant que la fraction métallique est évacuée et, éventuellement, acheminée à nouveau vers un module de criblage, ou vers des modules de criblage, pour la séparation des particules de métal de plus gros calibre par rapport aux particules de métal plus fines.

7. Procédé selon la revendication 5 ou 6,
caractérisé :
n ce que la granularité de la fraction silicatée est réglée de manière continue et se situe dans la gamme qui est normalement inférieure à 5 mm et avec une finesse d'une valeur de Blaine comprise entre 3500 et 15000.

8. Procédé selon une des revendications précédentes,
**caractérisé :**
**en ce qu'**on utilise une plaque de broyage avec un bord de retenue ayant une hauteur et un profil de section qui peuvent être prédéfinis, et
**en ce qu'**on utilise une plaque de broyage avec un bord de retenue dont la hauteur se situe dans la gamme comprise entre 0 et 160 mm.

9. Procédé selon une des revendications précédentes,
**caractérisé :**
**en ce que** le broyeur à rouleaux est actionné de telle manière que, dans le processus de broyage sur la piste de broyage, un lit de broyage est formé avec un empilement qui est comparable à un empilement en fonction de la densité, selon lequel une couche inférieure est formée de particules de métal qui, dans une très large mesure, ne sont pas réduites et qui se concentrent sur la piste de broyage, et une couche supérieure est formée des particules de silicates plus légères.

10. Procédé selon une des revendications précédentes,
**caractérisé :**
**en ce que** la fraction métallique évacuée sur le bord de retenue et déchargée d'un broyeur à rouleaux à flux d'air avec dispositif de séparation intégré vers au moins une extraction de rejets ou au moyen d'un dispositif d'extraction, ou, respectivement, la fraction métallique déchargée d'un dispositif de séparation monté en aval d'un broyeur à rouleaux à trop-plein, est soumise à un criblage et isolée en constituant un produit séparé ou en tant que produit intermédiaire.

11. Procédé selon une des revendications précédentes,
**caractérisé :**
**en ce que**, dans un broyeur à rouleaux à flux d'air, les étapes des processus de réduction, de désagglomération, de séparation ou respectivement de criblage, de tri et de transport, et éventuellement de séchage également, sont combinées, ou bien, dans un broyeur à rouleaux à trop-plein, les étapes des processus de réduction et de désagglomération sont mises en oeuvre et les processus de séparation ou respectivement de criblage, de tri et, éventuellement, de séchage sont mises en oeuvre par voie externe, et, de cette manière, des produits de grande qualité, d'une granularité et d'une pureté définies, sont obtenus, avec une fraction métallique largement exempte de silicates et avec une fraction silicatée pratiquement exempte de métaux.

12. Procédé selon une des revendications précédentes,
**caractérisé :**
**en ce que** la teneur en métaux des scories d'acier inoxydable ou respectivement des scories d'aciéries modifiées est comprise entre 2 et 30 % en poids.

13. Procédé selon une des revendications précédentes,
**caractérisé :**
**en ce que** le degré de décomposition des particules de métal est réglé sur le temps de séjour de la matière à broyer sur le plateau de broyage et sur le degré de la contrainte mécanique, et cela en contrôlant le réglage de la pression de travail, de la quantité de matière à traiter, de la vitesse de rotation du plateau de broyage et de la hauteur du bord de retenue.

14. Procédé selon une des revendications précédentes,
**caractérisé :**
**en ce que** la distribution des particules de métal et la séparation de la fraction silicatée sont réglées à l'aide du flux volumique et du réglage du dispositif de séparation, et/ou
**en ce qu'**une partie ou la totalité des particules de matière à gros grains rejetées d'un dispositif de séparation sont évacuées au moyen d'un organe d'évacuation supplémentaire et sont acheminées pour une étape d'enrichissement supplémentaire.

15. Procédé selon une des revendications précédentes,
**caractérisé :**
**en ce que** la participation des forces de cisaillement qui peuvent être appliquées dans la matière à broyer par les outils de broyage est définie en fonction des qualités de produit souhaitées, et l'on met en oeuvre une réduction par compression avec une contribution de cisaillement ou bien une réduction par compression libre de tout cisaillement.
